# EUROPÄISCHE PATENTANMELDUNG

(11) **EP 1 093 062 A2**
(43) Veröffentlichungstag der Anmeldung: **18.04.2001**
(21) Anmeldenummer: 00104173.0
(22) Anmeldetag: 29.02.2000
(51) Int. Cl.: G06F 17/60

(54) **Multimediales Informationssystem als Vertriebs- und Verkaufswerkzeug**

(30) Priorität: 11.10.1999 EP 99120262
(71) Anmelder: Hellmann, Karl H., Dr., 69198 Schriesheim (DE)
(72) Erfinder: Hellmann, Karl H., Dr., 69198 Schriesheim (DE)
(74) Vertreter: Rupp, Christian, Dipl.Phys.

(57) **Zusammenfassung**

Beispielsweise als Vertriebs- und Verkaufswerkzeug wird ein multimediales, dezentrales Offline-Informationssystem vorgeschlagen. Ein multimedialer Informationsordner mit mehreren Dateien (8), die über eine zentrale Linkstruktur (7) verknüpft sind, ist dabei auf einem Master (1) abgelegt, der beispielsweise von einem Produktmanager betreut wird. Mehrere Clients (2, 3), die Laptop-Computer von Außendienst-Mitarbeitern sein können, sind Klone des multimedialen Informationsordners des Masters (1) und enthalten die zur Darstellung der Informationsinhalte des Informationsordners notwendigen Anwendungsprogramme. Mittels eines Netzwerks (Internet) (4) können Master (1) und Clients (2, 3) miteinander kommunizieren. Die Clients (2, 3) sind nur zum Update des Informationsordners mit dem Netzwerk (4) in Verbindung. Im Übrigen können die Informationsinhalte des Informationsordners auf den Clients (2, 3) offline dargestellt werden, was einerseits die Online-Kosten senkt und andererseits eine unbegrenzte Autonomie der Clients (2, 3) gewährleistet.

## Beschreibung

Die vorliegende Erfindung bezieht sich auf ein multimediales Informationssystem, auf ein Computerprogramm-Produkt zur Implementierung eines solchen multimedialen Informationssystems, auf ein Verfahren zur Verteilung von Informationsinhalten von einem Master zu mehreren Clients über ein Netzwerk sowie auf ein Computerprogramm-Produkt zur Implementierung eines derartigen Verfahrens.

Die Erfindung findet insbesondere auf dem Gebiet der Verkaufs- und Vertriebsförderung Anwendung. Die Zielgruppe besteht demgemäß bspw. aus Außendienst-Mitarbeitern, Distributoren, Partnern und Kunden.

Die Verteilung von Informationsinhalten von einen zentralen Punkt (Master) über ein Netzwerk auf die dezentrale Clients ist ein Gebiet, das in letzter Zeit immer stärkere wirtschaftliche und technische Bedeutung erlangt hat. Bei einer klassischen Implementierung mittels des Internet werden dabei Informationsinhalte auf einem Webserver bspw. in Form einer Website abgelegt. Ein Benutzer kann, wenn er eine Netzverbindung aufgebaut hat, Informationsinhalte von diesem Webserver beispielsweise mittels einer sog. Browser-Software auf seinem PC betrachten. Eine solche Browser-Webanwendung ist eine Client-Anwendung, die es einem Benutzer ermöglicht, HTML-Dokumente auf dem World Wide Web bzw. einem anderen Netzwerk oder auf dem eigenen Computer zu betrachten.

HTML-Dokumente stellen ein Beispiel für eine zentrale Linkstruktur dar. HTML ist eine Auszeichnungssprache, die für Dokumente im World Wide Web verwendet wird. HTML verwendet Tags, um Elemente in einem Dokument auszuzeichnen. Diese Elemente geben der Browser-Anwendung Informationen darüber, wie diese Elemente dargestellt werden sollen. Außerdem geben die Tags an, wie bestimmte Elemente auf Benutzeraktionen reagieren sollen. Eine solche Benutzeraktion kann ein Mausklick auf ein sog. Hyperlink sein, das eine Verbindung zwischen einem Element in einem HTML-Dokument und einem anderen Elementen im Dokument, einem anderen Hypertext-Dokument, einer Datei oder einem Skript darstellt. Der Benutzer aktiviert also die Verknüpfung per Mausklick auf das verknüpfte Element, das in der Regel unterstrichen ist oder eine andere Farbe hat als der normale Text, um die Verknüpfung zu kennzeichnen.

Viele Browser-Anwendungen basieren auf einer Verbindung, die neben der Verarbeitung der IP-Pakete des Internets auch Graphiken im Dokument darstellen, Audio- und Videodaten wiedergeben und kleine Programme ausführen kann, die in HTML-Dokumenten eingebettet sein können. Oft benötigen Browser-Anwendungen zusätzliche Hilfsanwendungen (Plug-Ins), um solche Funktionen bewerkstelligen zu können.

Die obige Technik der Informationsinhaltsverteilung läßt sich mit dem Schlagwort 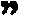 Pull-Technologie" bezeichnen, da der Benutzer sozusagen den Inhalt von sich aus auf den zentralen Webserver abholen muß.

Eine Mischung von Push- und Pull-Technologien bei der Verbreitung von Informationen des World Wide Web stellt das sog. Web Casting dar. Web Casting ist eine Technologie, bei der Benutzer mit individuell festlegbaren Inhalten versorgt werden, die sowohl regelmäßig als auch automatisch aktualisiert werden können. Diese Web Casting-Technologie erlaubt es somit Benutzern, die gewünschten Inhalte anzugeben, die sie empfangen möchten. Den Content-Providern wird wiederum ein Hilfsmittel zur Verfügung gestellt, mit dem sie die angeforderten Informationen direkt an den Computer des Benutzers liefern können. Diese Informationen sind in der Regel reine Dokumente ohne Navigationsmöglichkeit.

Es auch bekannt, URL-Adressen in Email-Nachrichten einzubauen, wenn indessen der Benutzer das Link entsprechend der URL-Adresse aktivieren möchte, muß er dazu Online mit dem entsprechenden Netz sein.

Aufgrund der Tatsache, daß gemäß der bekannten Technologien eine multimediale Informationsverbreitung und -darstellung auf dem Client nur im Online-Zustand möglich ist, da beispielsweise Hilfsprogramme auch über Plug-Ins online auf den Client geladen werden müssen, ergeben sich die Nachteile einer übermäßigen Belastung der Internet-Kommunikationsmöglichkeiten und insbesondere der Online-Kosten für den Benutzer.

Der wirtschaftliche Hintergrund der vorliegenden Erfindung ist die Schaffung eines Verkaufs- und Vertriebswerkzeugs beispielsweise für Außendienstmitarbeiter. Dieses Verkaufs- und Vertriebswerkzeug soll dem Außendienstmitarbeiter im Sinne einer gesamthaften, verkaufsprozeßorientierten Betrachtung von der Akquisition über die Bestellung bis hin zum After-Sales-Service von Hilfe sein. Der wirtschaftliche Hintergrund läßt sich somit auch in der Schaffung eines Außendienst-Informationssystems beschreiben.

Ausgehend von dem oben genannten Stand der Technik hat sich die vorliegende Erfindung zur Aufgabe gemacht, eine multimediale Informationstechnologie zu schaffen, gemäß der einerseits vermieden werden kann, daß der User (Client) zur Informationsverteilung ständig online mit einem zentralen Informationsstelle (Master) sein muß und dennoch gewährleisten kann, daß der Client aktuelle Information aufweist.

Generell läßt sich der zentrale Gedanke der Erfindung durch eine Abwendung von der allgemein im Internet vorherrschenden Pull-Technologie hin zu einer reinen Push-Technologie kennzeichnen.

Die oben genannte Aufgabe wird durch die Merkmale der unabhängigen Ansprüche gelöst. Die abhängigen Ansprüche bilden den zentralen Gedanken der Erfindung in besonders vorteilhafter Weise weiter.

Gemäß der vorliegenden Erfindung wird somit ein multimediales Informationssystem vorgeschlagen, das einen Master aufweist, der einen multimedialen Informationsordner mit mehreren Dateien aufweist, die über eine zentrale Linkstruktur verknüpft sind. Ein gut bekanntes Beispiel für eine zentrale Linkstruktur ist wie bereits eingangs gesagt beispielsweise ein HTML-Dokument. Ein Beispiel für einen multimedialen Informationsordner im Stand der Technik ist eine sog. Website, d. h. eine Gruppe zusammengehöriger HTML-Dokumente und damit verknüpfter Dateien, Skripten und Datenbanken, die von einem HTTP-Server im World Wide Web bereitgestellt werden. Die HTML-Dokumente einer Website sind durch Hyperlinks untereinander verknüpft. Meist dient eine sog. Homepage als Startpunkt der Websites, wobei die Homepage gleichzeitig auch als Inhaltsverzeichnis dient.

Das multimediale Informationssystem weist weiterhin mehrere Clients auf, die Klone des Informationspordners (der 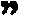 Website") des Masters sowie die zur Darstellung des Informationsordners notwendigen Anwendungsprogramme enthalten. Die Clients stellen somit geklonte, autonome, dezentrale 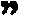 Websites" dar, die auch im Offline-Zustand (autonom) betrieben werden können, da die notwendigen Anwendungsprogramme bereits vorhanden sind und nicht etwa durch Plug-Ins wie beim Stand der Technik nachgeladen werden müssen, was eine Netzwerkverbindung erfordert.

Das multimediale Informationssystem weist weiterhin ein Netzwerk auf, mittels dem der Master und die Clients miteinander kommunizieren können.

Die Clients sind dabei nur zum Update des Informationsordners mit dem Netzwerk in Verbindung (online) um also in regelmäßigen Intervallen durch das Update sicherzustellen, daß die Clients tatsächlich Klone des Informationsordners des Masters sind. Dadurch, daß die Clients Klone des Informationsordners des Masters sind und darüber hinaus die zur Darstellung des Informationsordners notwendigen Anwendungsprogramme enthalten, können die Informationsinhalte des Informationsordners auf den Clients offline, d. h. ohne Netzwerkverbindung dargestellt werden.

In dem Betriebssystem der Clients kann eine Tabelle angelegt sein, die angibt, mit welcher Anwendung des Clients eine über ein Link der Linkstruktur aktivierte Datei zu öffnen ist. Wenn somit ein Link beispielsweise eines HTML-Dokuments durch Mausklick aktiviert wird, wird einerseits die entsprechende Multimediadatei und andererseits die zur Ausführung dieser Multimediadatei benötigte Anwendung geöffnet.

Das Update des multimedialen Informationsordners eines jeden Clients kann mittels Email von dem Master zu den jeweiligen Clients erfolgen.

Insbesondere kann das Update mittels an die jeweilige Email angehängter Dateien erfolgen, wobei diese angehängten Dateien (Attachments) in einen zugeordneten Email-Server in einem Verzeichnis separat zu der eigentlichen Email abgelegt werden können.

Auf jeden der Clients kann (im Hintergrund) ein Wächter-Utility-Programm vorgesehen sein, das während einer Online-Verbindung eines Clients mit seinem zugehörigen Email-Server die Email-Nachrichten und insbesondere das Verzeichnis, in dem die angehängten Dateien abgelegt werden, auf Updates hin durchsucht. Für den Fall, daß das Wächter-Utility-Programm des Clients neue Updates auffindet, werden diese beispielsweise entschlüsselt, entpackt und in den Informationsordner des Clients kopiert.

Beispielsweise als Unterprogramm des Wächter-Utility-Programms kann ein Säuberungs-Utility-Programm vorgesehen sein, das auf den Clients Dateien des multimedialen Informationsordner löscht, die im Zuge eines Updates von der Linkstruktur aus nicht mehr zugreifbar sind.

Das Säuberungs-Utility-Programm kann insbesondere derart ausgelegt sein, daß die zu löschenden Dateien jeweils mit einer Dummy-Datei vorbestimmter Größe und vorbestimmten (Text-) Inhalts überschrieben werden und die Dummy-Datei dann durch den Client gesucht und gelöscht werden kann.

Die Navigation der Linkstruktur auf den Clients kann beispielsweise mittels einer Browser-Anwendung erfolgen.

Unter 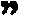 Navigation" ist dabei zu verstehen, daß die zentrale Linkstruktur (HTML-Dokument) des multimedialen Informationsordners des Clients auf dem Client betrachtet werden kann und darüber hinaus die Hyperlinks zwischen den (multimedialen) Dateien verfolgt werden können.

Gemäß einem weiteren Aspekt der vorliegenden Erfindung ist ein Computerprogramm-Produkt vorgesehen, das in dem in den Speicher eines Masters bzw. eines Clients eines Netzwerksystems geladenen Zustand ein multimediales Informationssystem nach der oben genannten Art implementiert.

Gemäß einem noch weiteren Aspekt der vorliegenden Erfindung ist ein Verfahren zur Verteilung von Informationsinhalten von einem Master zu mehreren Clients mittels eines Netzwerks vorgesehen. Die Informationsinhalte werden dabei auf den Clients durch einen multimedialen Informationsordner dargestellt, der über eine zentrale Linkstruktur miteinander verknüpfte Dateien enthält. Die multimedialen Informationsordner der Clients sind Klone eines multimedialen Informationsordners eines zentralen Masters. Die Clients weisen die zur Darstellung des Informationsordners notwendigen Anwendungsprogramme auf. Die Clients bauen somit nur zum Update des Informationsordners mit dem Netzwerk eine Verbindung auf, im Übrigen können die Informationsinhalte des Informationsordners auf den Clients offline, d. h. ohne Netzwerkverbindung dargestellt werden.

Gemäß einem noch weiteren Aspekt der vorliegenden Erfindung ist ein Computerprogramm-Produkt vorgesehen, das in dem in den Speicher einer Master bzw. eines Clients geladenen Zustand ein derartiges Verfahren insbesondere auf den Clients implementiert.

Weitere Merkmale, Vorteile und Eigenschaften der vorliegenden Erfindung werden aus der folgenden detaillierte Beschreibung eines Ausführungsbeispiels und bezugnehmend auf die begleitenden Figuren der Zeichnungen näher ersichtlich.
Fig. 1 zeigt eine schematische Ansicht eines erfindungsgemäßen Systems zur Verteilung multimedialer Informationsinhalte,
Fig. 2 zeigt eine schematische Ansicht zur Erläuterung eines Wächter-Utility-Programms, und
Fig. 3 zeigt eine schematische Ansicht zur Erläuterung eines Säuberungs-Utility-Programms.

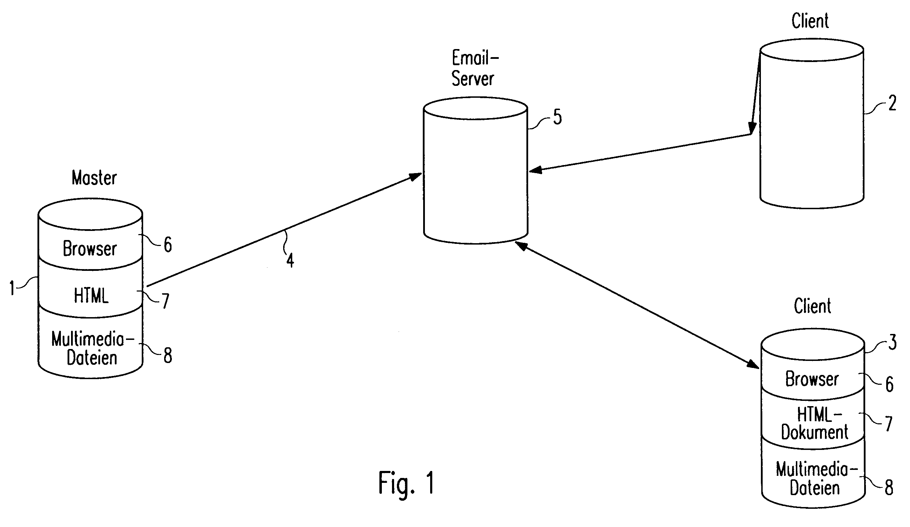

Bezugnehmend auf Fig. 1 sollen zuerst die zentralen Elemente des erfindungsgemäßen multimedialen Informationssystems erläutert werden. Das System umfaßt im wesentlichen einen Master 1 sowie eine praktisch unbegrenzte, aber dem Master 1 bekannte Anzahl Clients 2, 3. Auf dem Master 1 ist ein multimedialer Informationsordner, also eine Art Website, angelegt. Schematisch sind in dem Master 1 dargestellt: eine Browser-Anwendung 6, ein HTML-Dokument 7 als Beispiel für eine zentrale Linkstruktur sowie Multimediadateien 8, die durch die Linkstruktur miteinander verknüpft sind. Der Master 1 arbeitet in einer Internet-Umgebung und ist entsprechend zugreifbar. Die Clients 2, 3 können beispielsweise Laptop-Computer von Außendienst-Mitarbeitern sein.

Auf jedem der Clients 2, 3 sind multimediale Informationsordner ( 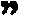 dezentrale Websites") angelegt, die eine exakte Kopie des multimedialen Informationsordners des Masters 1 darstellen und daher als 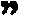 Klone" bezeichnet werden. Weiterhin sind auf den Clients 2, 3 sämtliche Anwendungsprogramme (Video/Audio-Player, Acrobate Reader (eingetragene Marke), ...) vorgesehen, so daß die Clients 2, 3 autonom, d. h. auch ohne Netzwerkverbindung (Offline-Zustand) die Informationsinhalte der Klone des multimedialen Informationsordners darstellen können. Im eigentlichen Betriebszustand, der der Regelfall ist, haben die Clients 2, 3 keinerlei Verbindung zu einem Netzwerk 4 (Internet). Lediglich zum Zeitpunkt von Update-Vorgängen bauen die Clients 2, 3 Netzverbindungen auf, so daß dann mittels eines Email Systems (siehe den Email-Server 5 in Fig. 1) Linkstrukturen und Multimediadateien des multimedialen Informationsordners der Clients 2, 3 bezüglich des multimedialen Informationsordners des Masters 1 abgedated werden können.

Durch diese Updates werden somit beispielsweise für den Vertriebs- und Verkaufsprozeß von Außendienst-Mitarbeitern relevanten Multimediainformationen aktiv vom Master 1 zu den Clients 2, 3 verteilt, so daß eine "Push-Technologie" im Gegensatz zu der allgemein im Internet verwendeten "Pull-Technologie" implementiert wird.

Auf jedem der Clients 2, 3 ist eine Browser-Anwendung vorgesehen, mit der das zentrale Linksystem (HTML-Dokument 7) navigiert werden kann. Durch Anklicken eines Hyperlinks des HTML-Dokuments kann auch im Offline-Zustand der Clients 2, 3 einerseits die notwendige Anwendung zur Ausführung (Execution) der durch das Link verbundenen Multimediadatei sowie auch die Multimediadatei selbst geöffnet werden. Im Gegensatz zur klassischen Internet-Technologie müssen also keine Plug-Ins heruntergeladen werden, da sämtliche Anwendungs-Programme auf den Clients 2, 3 bereits vorliegen.

Zur Implementierung dieser Funktion ist im Betriebssystemen (beispielsweise Windows) eine Tabelle angelegt, die angibt, welche Dateiart (Extension) mit welcher Anwendung geöffnet werden soll. Die Dateiformatverknüpfungen werden also durch das jeweilige Betriebssystem in der dazugehörenden Anwendung automatisch ausgeführt.

Zusammenfassend läßt sich also hinsichtlich der in Fig. 1 gezeigten Struktur sagen, daß die Clients 2, 3 autonome Intranets darstellen, die Klone des multimedialen Informationsordners des Masters 1 sind.

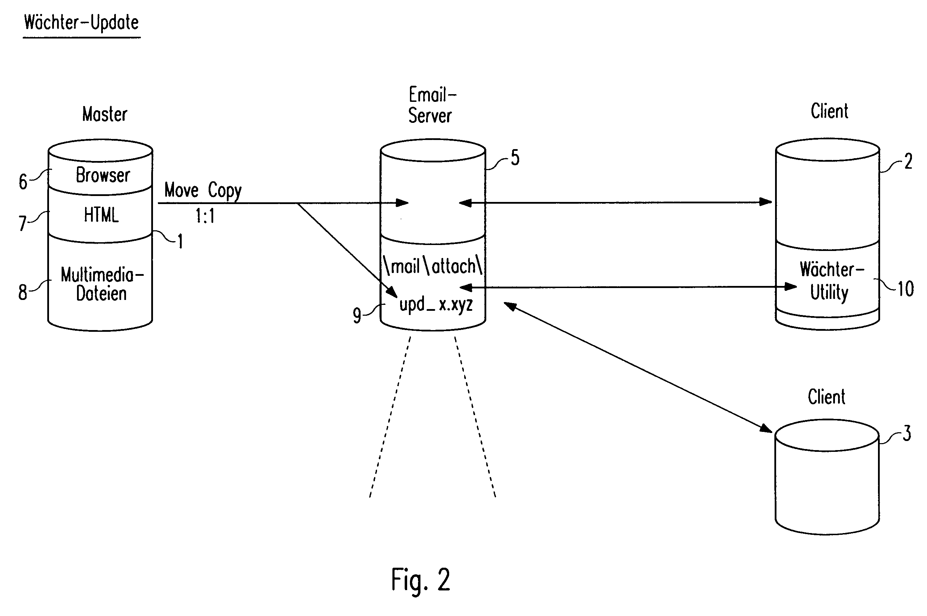

Wie bereits gesagt, sind die Clients 2, 3 im normalen Betriebszustand Off-Line. Um indessen sicherzustellen, daß der multimediale Informationsordner des jeweiligen Clients 2, 3 tatsächlich ein aktueller Klon des multimedialen Informationsordners des Masters 1 ist, werden in regelmäßigen Abständen Updates ausgeführt. Dazu wird wie in Fig. 2 schematisch mit den Email-Server 5 dargestellt die bekannte Email Technologie verwendet. Im Anhang einer Email werden gegebenenfalls verschlüsselte und komprimierte angehängte Dateien (Attachments) an die jeweiligen Email-Adressen der Clients (beispielsweise der Außendienst-Mitarbeiter) gesendet. Besonders vorteilhaft ist es, wenn wie in Fig. 2 ebenfalls dargestellt auf dem Email-Server 5 Attachment-Dateien automatisch in einem Verzeichnis 9 separat zu der eigentliche Email abgelegt werden.

In dem Beispiel von Fig. 2 wird die Update-Datei "upd_x.xyz" in das dafür vorgesehene Verzeichnis 9 mit der Bezeichnung "\mail\attach\" abgelegt. Wenn nun beispielsweise der Außendienst-Mitarbeiter als Benutzer des Clients 2, 3 am Ende einer Arbeitswoche, am Ende eines Quartals, etc. eine Netzwerkverbindung mit dem Email-Server 5 aufbaut, um sich seine Emails abzuholen, wird der Abgleich (Update) mit dem multimedialen Informationsordner des Masters 1 ausgeführt.

Dazu ist auf jedem Client 2, 3 ein Wächter-Utility-Programm 10 vorgesehen, das während des Online-Zustands des Clients 2, 3 mit dem Email-Server 5 quasi im Hintergrund läuft. Während dieses Online-Zustands durchsucht das Wächter-Utility-Programm 10 das ihm bekannte Verzeichnis 9 nach Update-Dateien. Falls das Wächter-Utility-Programm 10 derartige Dateien einer vorbestimmten Dateiart (Extension) in diesem Verzeichnis "\mail\attach\" auffindet, kopiert es sie gegebenenfalls nach einer Entschlüsselung und Dekomprimierung in den multimedialen Informationsordner des jeweiligen Clients 2, 3. Durch diese Update-Funktion kann also eine überarbeitete zentrale Linkstruktur (HTML-Dokument) 7 sowie abgeänderte oder neu hinzuzufügende Multimediadateien 8 in den multimedialen Informationsordner des Clients kopiert werden. Der Client 2, 3 stellt somit nach diesem Update-Vorgang wieder einen exakten Klon des multimedialen Informationsordners des Masters 1 dar.

Durch diesen Vorgang können indessen Dateien 8 der Clients 2, 3, die im Zuge eines Update-Vorgangs nicht mehr benötigt werden, nicht beseitigt werden.

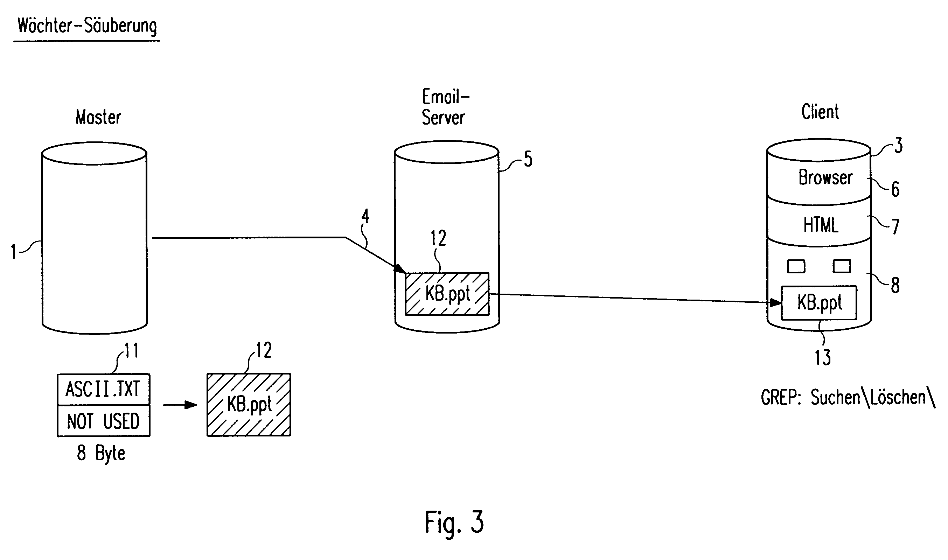

Dazu ist wie in Fig. 3 dargestellt ein Säuberungs-Utility-Programm auf den Client 2, 3 vorgesehen. Durch dieses Säuberungs-Utility-Programm wird eine 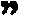 Clean-Up"-Funktion implementiert. In dem Szenario von Fig. 3 wird angenommen, daß die Datei 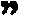 KB.ppt" 13, die eine Präsentationsdatei darstellt, beseitigt werden soll. Dazu wird seitens des Masters 1 zuerst eine ASCII-Datei 11 (Extension 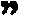 txt") mit dem Text-String 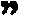 not used" und der Dateigröße 8 Byte erzeugt und in eine Dummy-Datei 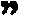 KB.ppt" 12 geschrieben. Diese Dummy-Datei 12 ist nur scheinbar eine Präsentations-Datei, in Wirklichkeit ist ihr Inhalt also ein ASCII-Code gemäß der zu erzeugenden Datei 11. Im Zuge eines Updates wird dann diese Dummy-Datei 12 der zu löschenden Datei 13 auf dem Client 3 überschrieben. Auf dem Client 3 befindet sich somit eine Datei 12, die bezüglich ihrer Endung scheinbar eine Präsentations-Datei darstellt, in Wirklichkeit aber den Inhalt einer ASCII-Datei gemäß der Datei 11 hat.

Daraufhin kann das Säuberungs-Utility-Programm des Clients 3 eine Suche zum Suchen und Löschen von Dateien ausführen, die eine Länge von 8 Byte haben und als Inhalt den Textstring 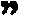 not used" aufweisen. Diese Suche ist insofern ein durch die Byte-Länge und den Textinhalt eindeutig und kann beispielsweise in UNIX durch den 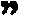 GREP"-Befehl ausgeführt werden.

Beispielsweise der Produktmanager, der den Master 1 betreut, hat dafür zu sorgen, daß auch das entsprechende Link in der HTML-Struktur 7, das auf diese zu löschende Datei 13 verweist, beseitigt wird. Sicherheitshalber kann der Produktmanager beispielsweise die Linkstruktur 7 des Masters 1 regelmäßig daraufhin prüfen, ob sämtliche in der Linkstruktur aufgeführten Hyperlinks tatsächlich eine Datei zugeordnet ist.

Durch diese Update-Funktion benutzt der Außendienst-Mitarbeiter als User des Clients immer dieselbe vertraute Oberfläche der Browser-Anwendung. Die darunterliegenden Multimediainhalte und deren Verknüpfung werden automatisch im Zuge der Update-Funktion erneuert.

Bei der vorliegenden Erfindung stellt der Informationsfluß eine Push-Anwendung dar. Ein weiterer Gegensatz zum Internet besteht darin, daß beim Internet die Informationen je Anbieter zentral auf Servern liegen, während sie bei der vorgestellten Technologie bei den Teilnehmern der Zielgruppe (Außendienst, Distributoren, Partner/Kunden, Kunden) dezentral, lokal und offline auf deren Arbeitsplatzrechner/Laptop automatisch abgelegt werden. Im Übrigen können die gleichen (Multimedia-) Technologien und Formate wie beim World Wide Web (WWW) genutzt werden.

Wesentlich ist also die Link(HTML)-Datenstruktur, die die Zielgruppe mit Hilfe eines handelsüblichen Browsers komfortabel und einfach durch das Dokumenten- und Multimediaangebot (Audio, Video, 3D,...) des Anbieters navigiert. Die Dokumente-Multimedia-Anwendungen werden nicht im Browser gelesen, sondern durch die Datenformatverknüpfungen im jeweiligen Betriebssystem in der zugehörigen Anwendung automatisch ausgeführt. Die Zielgruppe hat dabei nur Leserechte.

Die übermittelten Informationsinhalte können von dem Typ des Adressaten abhängig gemacht werden, wie aus der folgenden Tabelle deutlich wird:

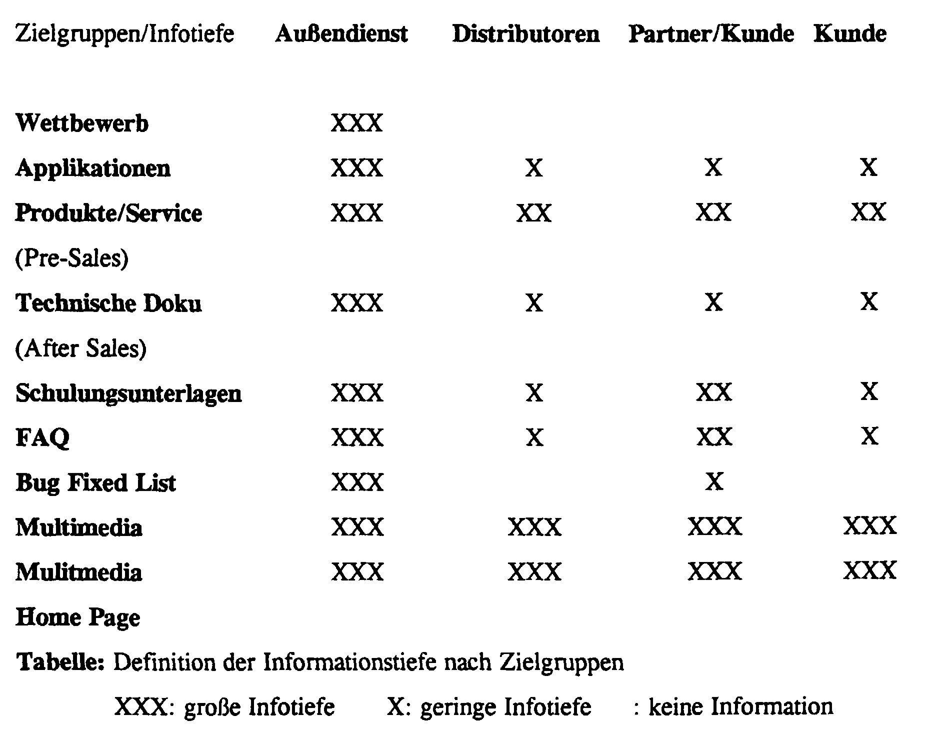

Im Folgenden soll ein Beispiel ausgeführt werden:

Beim Navigieren durch die HTML-Navigationsstruktur findet die Zielgruppe z. B. der Außendienst-Mitarbeiter, ein Hyperlink auf eine Power Point (Warenzeichen)-Produktpräsentation (z. B. maschine.ppt). Durch einfaches Doppelklick auf den Hyperlink öffnet die Verknüpfung des Betriebssystems die Anwendung 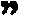 ppt.exe" und lädt die Daten z. B. 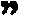 maschine.ppt" zur automatischen Bildschirmpräsentation. Auf diese Weise benötigt die Zielgruppe keine Kenntnisse mehr, welche (Mulitmedia)-Dateien von welchen Anwendungen verarbeitet werden.

Im Vergleich zur Plug-In Technologie können also die Kosten durch verringerte Online-Zeiten verringert werden und gleichzeitig die Software-Unabhängigkeit verbessert werden (Plug-Ins sind in der Regel Browser-spezifisch ausgelegt).

Durch den vorgestellten Update Mechanismus kann der heute zunehmenden Innovationsgeschwindigkeit Rechnung getragen werden. Entschlüsseln, entpacken (dekromprimieren) und kopieren der neuen Daten in die bereits bei der Zielgruppe vorhandene multimediale Informationsordner-Struktur erfolgt vollautomatisch ähnlich einem Email-Subscribe-Service (Webcast). Bis auf die Eingabe eines Passworts erfolgt die Eingabe für die Zielgruppen automatisch.

Auslöser für einen Update-Zyklus ist der verantwortliche Produktmanager als Betreuer des Masters 1.

Das dargestellte multimediale Informationssystem läßt sich nicht nur als Vertriebs- und Verkaufswerkzeug, sondern auch als Schulungswerkzeug benutzen.

Im Folgenden sollen die Vorteile, die durch die Erfindung geleistet werden, nochmals zusammengefaßt werden:
- Aufgrund der stark verringerten Online-Seiten kann eine nahezu kostenlose, weltweite Informationsverteilung großer Datenmengen mit dem wesentlich zeitgleichen Empfang für beliebig viele Teilnehmer erfolgen.
- Die Technologie ist im Wesentlichen unabhängig von Software, Release-Ständen, Hardware sowie Betriebssystem.
- Es kann eine redundanzfreie Einbindung sämtlicher Printmedien beispielsweise mit Hilfe des auf dem Markt erhältlichen Programms Acrobate Reader (Warenzeichen) folgen.
- Das System ist leicht handhabbar, da die Navigation mit handelsüblichen WWW-Browser Anwendungen erfolgen kann, Tastatureingaben weitgehend durch Mausklicks ersetzt können, bei den jeweiligen Verzweigungen (Links) erklärender Text hinzugefügt werden kann und der Update-Service im Wesentliche voll automatisiert ist.
- Dokumente/Multimediadateien können über die genannte Tabelle des Betriebssystems eingebunden werden, so daß das zum Teil aufwendige und zeitraubende Common-Gateway-Interface (CGI) entfallen kann.
- Die Technologie ist multimedia-fähig, da auch große Datenmengen wie Audio-, Video- und 3D-Darbietungen offline schnell genutzt werden können. Falls die Zielgruppe Außendienst-Mitarbeiter mit entsprechender Hardware (MPEG-, Sound- und 3D-Grafikkarten) ausgerüstet ist, können diese Medien auch in entsprechender Qualität verwendet werden.
- Durch die Offline-Konzeption als normalen Betriebszustand sind sämtliche Informationen immer mobil verfügbar, d. h. auch vor Ort beim Kunden, im Hotel, im Flugzeug, im Home Office und zu Schulungszwecken, etc.
- Einmal erworbene Schulungs- und technische Dokumentationen werden immer aktualisiert.

## Patentansprüche

1. Multimediales Informationssystem zur Verwendung als Vertriebs- und Verkaufswerkzeug, aufweisend:
- einen Master (1), der einen multimedialen Informationsordner mit mehreren Dateien (8) aufweist, die über eine zentrale Linkstruktur (7) verknüpft sind,
- mehrere Clients (2, 3), die Klone des Informationsordners des Masters (1) sowie die zur Darstellung des Informationsordners notwendigen Anwendungsprogramme enthalten, und
- ein Netzwerk (4), mittels dem der Master (1) und die Clients (2, 3) miteinander kommunizieren können,
wobei die Clients nur zum Update des Informationsordners mit dem Netzwerk (4) in Verbindung sind und im übrigen die Informationsinhalte des Informationsordners auf den Clients (2, 3) Off-Line darstellbar ist.

2. Multimediales Informationssystem nach Anspruch 1,
dadurch gekennzeichnet,
daß in dem Betriebssystem der Clients (2, 3) eine Tabelle angelegt ist, die angibt, mit welcher Anwendung des Clients (2, 3) eine über ein Link der Linkstruktur (7) aktivierte Datei zu öffnen ist.

3. Multimediales Informationssystem nach einem der Ansprüche 1 oder 2,
dadurch gekennzeichnet,
daß das Update des multimedialen Informationsordners mittels Email von dem Master (1) zu den jeweiligen (2, 3) Clients erfolgt.

4. Multimediales Informationssystem nach Anspruch 3,
dadurch gekennzeichnet,
daß der Update mittels an die jeweilige Email angehängte Dateien erfolgt, die in einem zugeordneten Email-Server (5) in einem Verzeichnis (9) separat zu der eigentlichen Email ablegbar sind.

5. Multimediales Informationssystem nach einem der Ansprüche 3 oder 4,
gekennzeichnet durch
ein Wächter-Utility-Programm (10) auf einem jeden Client (2, 3), das während einer Online-Verbindung eines Clients mit dem zugeordneten Email-Server (5) die Email-Nachrichten für den jeweiligen Client auf Updates hin durchsucht.

6. Multimediales Informationssystem nach einem der vorhergehenden Ansprüche,
gekennzeichnet durch,
ein Säuberungs-Utilityprogramm, das auf den Clients (2, 3) Dateien des multimedialen Informationsordners löscht, die im Zuge eines Updates von der Linkstruktur (7) aus nicht mehr zugreifbar sind.

7. Multimediales Informationssystem nach Anspruch 6,
dadurch gekennzeichnet,
daß das Säuberungs-Utilityprogramm derart ausgelegt ist, daß die zu löschende Dateien (13) jeweils mit einer Dummy-Datei (11, 12) vorbestimmter Größe und vorbestimmten Inhalts überschrieben werden und die Dummy-Datei (12) dann durch den Client (2, 3) gesucht und gelöscht werden kann.

8. Multimediales Informationssystem nach einem der vorhergehenden Ansprüche,
dadurch gekennzeichnet,
daß die Navigation der Linkstruktur (7) auf den Clients (2, 3) mittels einer Browser-Anwendung (6) erfolgt.

9. Multimediales Informationssystem nach einem der vorhergehenden Ansprüche,
dadurch gekennzeichnet,
daß die übermittelten Informationsinhalte nach Adressaten-Typen unterschieden werden.

10. Computerprogramm-Produkt,
dadurch gekennzeichnet,
daß es in dem in den Speicher eines Masters (1) bzw. eines Clients (2, 3) geladenen Zustand ein multimediales Informationssystem nach einem der vorhergehenden Ansprüche implementiert.

11. Verfahren zur Verteilung von Informationsinhalten von einem Master zu mehreren Clients über ein Netzwerk zur Schaffung eines multimedialen Vertriebs- und Verkaufswerkzeugs, wobei
- die Informationsinhalte auf den Clients (2, 3) durch einen multimedialen Informationsordner dargestellt werden, der über eine zentrale Linkstruktur (7) miteinander verknüpfte Dateien (8) enthält,
- die multimedialen Informationsordner der Clients (2, 3) Klone eines multimedialen Informationsordners des Masters (1) sind und die Klone die zur Darstellung des Informationsordners notwendigen Anwendungsprogramme aufweisen, und
- die Clients (2, 3) nur zum Update des Informationsordners mit dem Netzwerk (4) in Verbindung sind und im übrigen die Informationsinhalte des Informationsordners auf den Clients Off-Line dargestellt werden.

12. Verfahren nach Anspruch 11,
dadurch gekennzeichnet,
daß in dem Betriebssystem der Clients eine Tabelle angelegt ist, die angibt, mit welcher Anwendung des Clients (2, 3) eine über ein Link aktivierte Datei zu öffnen ist.

13. Verfahren nach Anspruch 11 oder 12,
dadurch gekennzeichnet,
daß der Update des multimedialen Informationsordners mittels Email (4) von dem Master (1) zu den jeweiligen Clients erfolgt.

14. Verfahren nach Anspruch 13,
dadurch gekennzeichnet,
daß der Update mittels an die jeweilige Email angehängte Dateien erfolgt, die auf einem zugeordneten Email-Server (5) in einem Verzeichnis (9) separat zu der eigentlichen Email abgelegt werden.

15. Verfahren nach einem der Ansprüche 13 oder 14,
gekennzeichnet durch
ein Wächter-Utility-Programm (10) auf einem jeden Client, das während einer Online-Verbindung eines Clients (2, 3) mit dem zugeordneten Email-Server Email-Nachrichten für den jeweiligen Client auf Updates hin durchsucht.

16. Verfahren nach einem der vorhergehenden Ansprüche 11 bis 15,
gekennzeichnet durch,
ein Säuberungs-Utilityprogramm, das auf den Clients Dateien (13) des multimedialen Informationsordners löscht, die im Zuge eines Updates von der Linkstruktur (7) aus nicht mehr zugreifbar sind.

17. Verfahren nach Anspruch 16,
dadurch gekennzeichnet,
daß das Säuberungs-Utilityprogramm die zu löschende Dateien (13) jeweils mit einer Dummy-Datei (11, 12) vorbestimmter Größe und vorbestimmten Inhalts überschreibt und die Dummy-Datei (12) dann durch den Client gesucht und gelöscht wird.

18. Verfahren nach einem der vorhergehenden Ansprüche 11 bis 17,
dadurch gekennzeichnet,
daß die Navigation der Linkstruktur (7) auf den Clients (2, 3) mittels einer Browser-Anwendung (6) erfolgt.

19. Verfahren nach einem der Ansprüche 11 bis 18,
dadurch gekennzeichnet,
daß die übermittelten Informationsinhalte nach Adressaten-Typen unterschieden werden.

20. Computerprogramm-Produkt,
dadurch gekennzeichnet,
daß es in dem in den Speicher eines Masters (1) bzw. eines Clients (2, 3) geladenen Zustand ein Verfahren nach einem der Ansprüche 11 bis 19 implementiert.
